# DEMANDE DE BREVET EUROPEEN

(11) **EP 1 386 780 A1**
(43) Date de publication de la demande: **04.02.2004**
(21) Numéro de dépôt: 03291904.5
(22) Date de dépôt: 31.07.2003
(51) Int. Cl.: B60P 1/26

(54) **Système de commande de porte rabattable**

(30) Priorité: 31.07.2002 FR 0209793
(71) Demandeur: Etablissements Rolland S.A., 29800 Pencran (FR)
(72) Inventeur: Emily, Jean-Yves, 29800 Pencran (FR)
(74) Mandataire: Maillet, Alain

(57) **Abrégé**

Un système de commande de porte rabattable commande une porte rabattable (1) articulée autour d'un axe horizontal (2) installé entre deux montants (3). Selon l'invention, ledit système de commande comporte des moyens de réglage de la hauteur de l'axe horizontal (2) de ladite porte.

## Description

La présente invention concerne un système de commande de porte rabattable et plus particulièrement un système de commande adapté à commander le déverrouillage, l'ouverture, la fermeture, et le verrouillage d'une porte rabattable.

Il est bien connu d'installer une porte rabattable à l'arrière d'un conteneur de transport de matériaux, comme par exemple une benne, installée sur la plate-forme d'un véhicule comme, par exemple, une remorque. C'est notamment le cas lorsque le conteneur peut basculer par rapport au châssis du véhicule comme, par exemple, dans le cas d'une benne basculante : la porte rabattable permet de mieux réguler le déchargement du contenu. De telles portes rabattables sont plus généralement installées à l'arrière d'un conteneur basculant ou non pour permettre le chargement ou le déchargement fractionné du contenu.

Une telle porte rabattable est montée pivotante autour d'un axe intervenant au niveau d'une extrémité supérieure de l'arrière du conteneur et elle peut pivoter autour de cet axe sous la commande d'un système de commande comprenant généralement des vérins hydrauliques. En position de fermeture, la porte s'étend généralement verticalement contre l'ouverture arrière du conteneur. Elle s'ouvre sous la commande du système de commande en pivotant vers le haut, libérant ainsi l'ouverture du conteneur en commençant par la partie basse de ce dernier.

Un système de commande de porte rabattable est décrit, par exemple, dans la demande de brevet français FR 2 699 470. Il comprend des vérins installés globalement suivant une direction longitudinale sur un conteneur à porte arrière rabattable. Les pieds des vérins sont montés pivotants autour d'un premier axe transversal fixé à une certaine distance de la porte et leurs têtes viennent solliciter un premier ensemble de biellettes montées pivotantes autour d'un second axe transversal fixé plus proche de la porte que le premier axe transversal, le premier ensemble de biellettes étant raccordé par un second ensemble de biellettes à un ensemble de bras articulés autour d'un troisième axe transversal fixé à la verticale de la porte, cet ensemble de bras articulés commandant l'ouverture et la fermeture de la porte. Un tel système de commande de porte rabattable est relativement encombrant.

Pour des raisons de sécurité, il est important de prévoir un système de verrouillage associé au système de commande de la porte permettant d'assurer que la porte reste en position fermée. Ainsi qu'il est mentionné dans la demande de brevet français FR 2 699 470 susmentionnée, un système de verrouillage existant consiste à rattacher à un axe d'articulation logé dans un trou oblong du système de commande de la porte une tringlerie de verrouillage. Ce système présente comme inconvénient une ouverture initiale brutale de la porte. La demande de brevet français FR 2 699 470 susmentionnée propose une solution à ce problème grâce à deux vérins qui, au moyen d'une valve associée à l'un des vérins, agissent séquentiellement en déverrouillage et ouverture et simultanément en fermeture et verrouillage. Dans tous les cas le système de verrouillage occupe une place importante et rend le système de commande de porte encore plus encombrant.

Dans le cas des conteneurs ouverts vers le haut, comme par exemple, pour les bennes, basculantes ou non, il est intéressant de pouvoir régler la hauteur des parois latérales au moyen, par exemple, de ridelles, rallonges ou réhausses installées de manière amovible dans le prolongement de la partie supérieure de ces parois latérales. Pour fixer la hauteur de l'axe d'articulation de la porte rabattable, il faut tenir compte de la hauteur maximum du conteneur rendue possible par la réhausse des parois latérales. Lorsque les parois latérales ne sont pas réhaussées, la porte rabattable se trouve articulée bien au dessus de l'extrémité supérieure du conteneur.

Les systèmes de commande de porte rabattable existants ne permettent pas de résoudre ce problème.

La présente invention vise un système de commande de porte rabattable de conteneur qui ne présente pas les inconvénients susmentionnés et qui notamment, en premier lieu, permet un réglage de hauteur du conteneur et, en second lieu, présente un encombrement limité.

A cet effet, est proposé un système de commande de porte rabattable, ladite porte rabattable étant articulée autour d'un axe horizontal installé entre deux montants et pouvant, à partir d'une position de fermeture dans laquelle elle s'étend contre lesdits montants, pivoter vers le haut sous la commande dudit système de commande, caractérisé en ce que ledit système de commande comporte des moyens de réglage de la hauteur de l'axe horizontal de ladite porte.

Selon une autre caractéristique de l'invention, lesdits moyens de réglage se composent de moyens coulissants adaptés à coulisser le long desdits montants et de moyens de fixation adaptés à immobiliser lesdits moyens coulissants par rapport auxdits montants.

Les moyens coulissants sont par exemple des profilés de section semblable à celle des montants et adaptée à ce qu'un profilé vienne se loger à l'intérieur d'un montant et puisse coulisser suivant la hauteur de ce dernier. Les moyens de support peuvent être de simples flasques soudés aux extrémités supérieures des profilés coulissants. Les flasques de support peuvent être juste au-dessus des montants en position basse de l'axe et être à distance de l'extrémité supérieure des montants en position haute de l'axe.

Selon un autre aspect de la présente invention, le système de commande comprend au moins un moyen de commande adapté à exercer une action dans une direction parallèle auxdits montants.

Le moyen de commande agissant dans une direction parallèle aux montants, il ne fait pas obstacle au réglage de la hauteur de l'axe d'articulation de la porte. Par exemple, lorsque le moyen de commande est un vérin agissant le long des montants et relié à la porte par une articulation intervenant entre la tête du vérin et la porte, le réglage en hauteur de la porte est rendu possible par une simple modification de la position de la tige du vérin par rapport au fût.

Avantageusement, un moyen de transmission reliant le moyen de commande et la porte est une biellette articulée, d'une part, à un organe à déplacement commandé en translation du moyen de commande, comme par exemple, la tige d'un vérin et d'autre part, à ladite porte, à une certaine distance de l'axe d'articulation de ladite porte.

Selon un autre aspect de la présente invention, ledit moyen de commande est installé à l'intérieur d'un montant. Avantageusement, un moyen de commande est installé dans chacun desdits montants. Sur les portions de la hauteur des montants aux niveaux desquelles coulissent les moyens coulissants, le moyen de commande se trouve à l'intérieur du moyen coulissant. Il suffit pour cela que les montants et les moyens coulissants soient, par exemple, des profilés creux à l'intérieur desquels peut s'étendre un moyen de commande, comme par exemple, un vérin.

Ainsi, l'encombrement du système de commande est très faible puisqu'il se trouve presque entièrement compris dans les montants. Même si une partie du système de commande, comme par exemple l'articulation entre le moyen de commande et la porte, se trouve hors des montants, elle se trouve dans une position-au-dessus des montants - où elle est peu gênante.

Selon un autre aspect de la présente invention, un système de verrouillage de la porte comprend au moins un sabot monté au dessous d'un montant et pivotant entre une position de verrouillage dans laquelle une extrémité du sabot vient en butée contre ladite porte et une position de déverrouillage. Ce sabot est monté pivotant autour d'un axe parallèle à l'axe d'articulation de la porte.

Avantageusement, le sabot pivote sous la commande d'un moyen de commande de verrouillage qui, comme le moyen de commande d'ouverture de la porte, est adapté à exercer une action dans une direction parallèle audit montant.

Avantageusement, ce moyen de commande de verrouillage, par exemple un vérin, est logé à l'intérieur d'un montant, afin de limiter l'encombrement du système de commande.

Avantageusement, un sabot de verrouillage et un moyen de commande correspondant sont associés à chacun des montants.

Selon un autre aspect de la présente invention, le même moyen de commande forme moyen de commande d'ouverture et moyen de commande de verrouillage.

Ce moyen de commande agit par son extrémité supérieure sur la porte et par son extrémité inférieure sur le sabot. Dans le cas où ce moyen de commande est un vérin, l'extrémité inférieure du fût du vérin est articulée sur le sabot et l'extrémité supérieure de la tige du vérin est articulée sur la porte.

Avantageusement, en phase d'ouverture de la porte, l'extrémité inférieure dudit moyen de commande fait d'abord pivoter ledit sabot en position de déverrouillage, l'extrémité supérieure dudit moyen de commande étant maintenue immobile par l'action du poids de ladite porte, puis l'extrémité supérieure dudit moyen de commande fait pivoter ladite porte, l'extrémité inférieure dudit moyen de commande étant maintenue immobile du fait d'une extrémité dudit sabot qui vient en butée contre ledit montant.

Inversement, en phase de fermeture de la porte, c'est d'abord la porte qui va pivoter vers sa position de fermeture, le poids de la porte continuant à maintenir le sabot en position de déverrouillage. Ce n'est qu'une fois la porte en butée contre les montants que l'action du vérin va entraîner le pivotement du sabot en position de verrouillage.

Selon un autre aspect de la présente invention, un moyen de blocage amovible intervient entre ladite porte et au moins un desdits montants, ledit moyen de blocage interdisant l'ouverture par pivotement de ladite porte mais permettant un coulissement relatif de ladite porte par rapport auxdits montants, de sorte que lorsque ledit moyen de commande est actionné, il sollicite l'ensemble solidaire constitué par ladite porte, lesdits moyens de support et lesdits moyens coulissants vers le haut.

Ainsi, lorsque les moyens de fixation reliant les moyens coulissants aux montants sont désolidarisés, l'action du moyen de commande provoque le déplacement vers le haut de l'ensemble constitué par la porte, les moyens de support et les moyens coulissants, par coulissement de ces derniers dans les montants, et la porte peut être commandée en ouverture par coulissement vers le haut. Ce type d'ouverture, connue sous le nom d'ouverture guillotine, est une alternative intéressante à l'ouverture par pivotement, notamment dans le cas où l'on désire n'ouvrir qu'une partie basse du conteneur.

Avantageusement, la porte comporte dans sa partie inférieure une rallonge amovible permettant le réglage de la hauteur de ladite porte.

Lorsque l'axe de pivotement de la porte est élevé, l'on peut, à l'aide de cette rallonge, fermer totalement le conteneur.

L'invention, ses caractéristiques et ses avantages, ressortiront mieux de la description détaillée qui suit d'un exemple de réalisation d'un système de commande de porte rabattable selon l'invention, en référence aux Figs. annexées, parmi lesquelles :
la Fig. 1 est une vue schématique en élévation de côté d'une porte rabattable avec son système de commande selon l'invention, montrant une première position de fonctionnement ;
la Fig. 2 est une vue en coupe transversale selon la ligne II-II d'un montant de la porte rabattable de la Fig. 1 ;
la Fig. 3 est une vue en coupe transversale selon la ligne III-III d'un montant de la porte rabattable de la Fig. 1 ;
la Fig. 4 est une vue similaire à celle de la Fig. 1, à plus petite échelle, montrant une seconde position de fonctionnement ;
la Fig. 5 est une vue similaire à celle de la Fig. 1, montrant une troisième position de fonctionnement ; et
la Fig. 6 est une vue en coupe transversale selon la ligne VI-VI d'un montant et d'une partie de la porte rabattable de la Fig. 5.

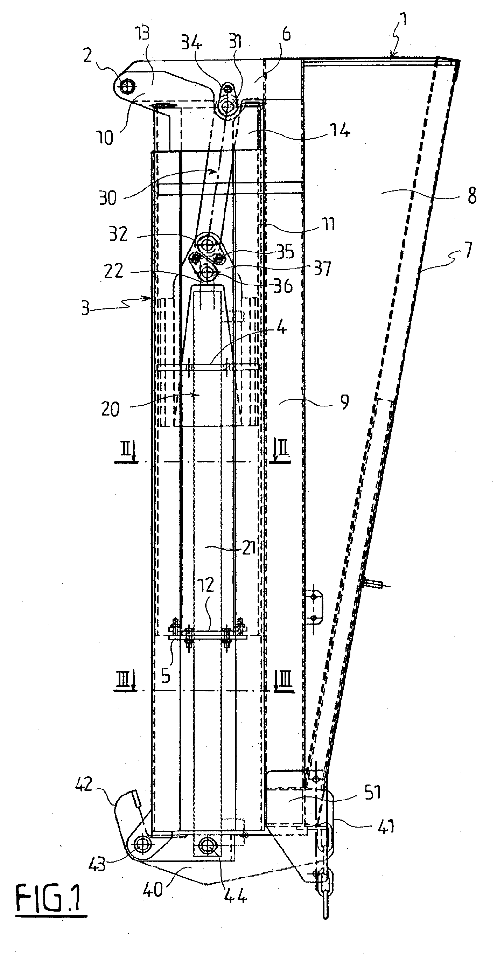

Une porte rabattable est installée, par exemple, à l'arrière d'une benne basculante. En référence à la Fig. 1, la porte 1 est montée pivotante autour d'un axe horizontal 2 installé entre deux montants 3.

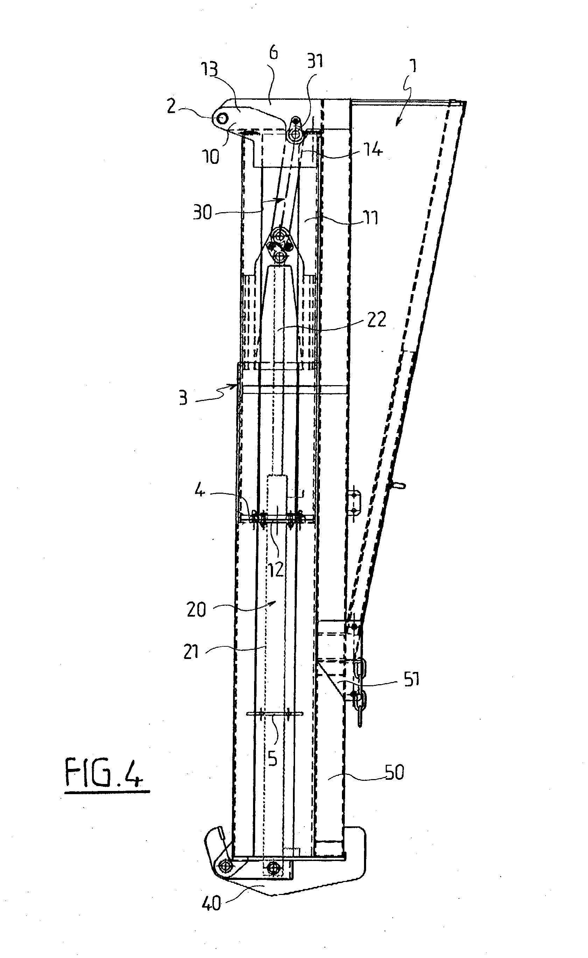

Telle que représentée, la porte 1 comprend une paroi frontale 7 bordée de deux parois latérales 8 de même forme triangulaire. En position de fermeture, les bords avant des parois latérales s'étendent verticalement et la paroi frontale 7 s'étend avec une certaine inclinaison vers l'arrière. Le long des bords avant des parois latérales 8 sont ménagés des épaulements 9, en pratique des profilés de section rectangulaire soudés contre les parois latérales. Ces épaulements 9 sont destinés à venir en butée contre les montants 3 lorsque la porte 1 est en position de fermeture. Dans la partie inférieure de la porte 1, entre les pointes des triangles formés par les parois latérales 8 s'étend un nez 51. Ce nez est adapté à recevoir une rallonge amovible 50, ainsi qu'il sera décrit en référence à la Fig. 4. Dans la partie supérieure de la porte 1 sont ménagés deux bras 6, prolongeant vers l'avant les bords supérieurs des parois latérales 8, et s'étendant par conséquent horizontalement en position de fermeture de la porte. Ces bras 6 sont en prise à leurs extrémités avec l'axe 2 et forment donc des bras d'articulation de la porte 1. Ils sont pourvus dans leurs parties médianes d'un axe 31 sur lequel est articulée une biellette 30, ainsi qu'il sera décrit par la suite. En pratique, l'axe 31 est porté par une pièce de fixation à deux axes 34.

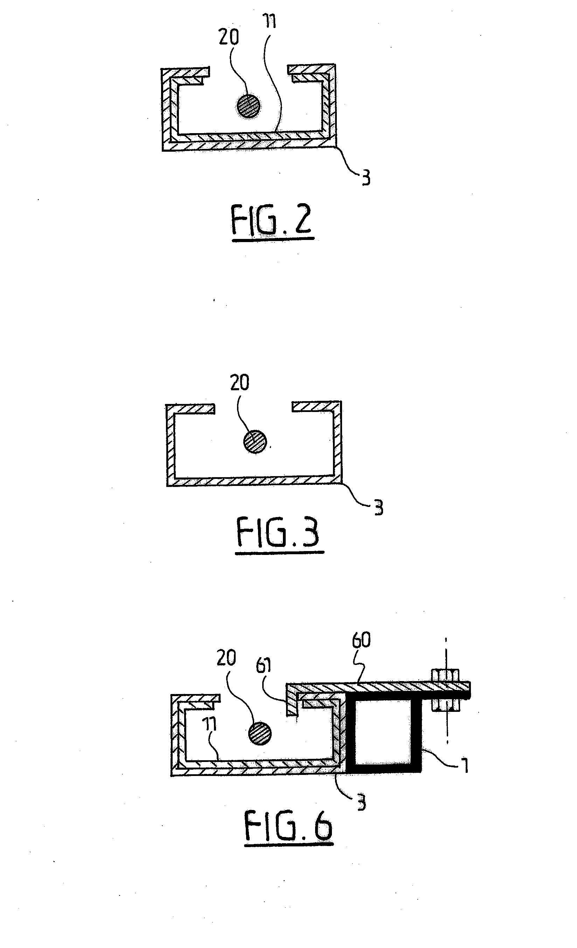

Ainsi qu'on le voit mieux sur la Fig. 3, les montants 3, intervenant l'un en regard de l'autre, par exemple au niveau des bords arrières des parois latérales d'une benne basculante, comprennent une enveloppe 3 constituée par un profilé creux de section rectangulaire avec une fente centrale s'étendant verticalement sur toute la hauteur de l'un de ses grands côtés. L'enveloppe du montant 3 est soudée contre une paroi latérale de la benne par son grand côté non ouvert, le côté ouvert étant tourné vers l'extérieur.

Selon l'invention, l'axe 2 d'articulation de la porte 1 est monté entre deux moyens de support 10 associés à des moyens coulissants 11 adaptés à coulisser le long des enveloppes des montants 3 et à des moyens de fixation 4, 5 et 12 adaptés à immobiliser les moyens coulissants par rapport aux montants, de sorte que la hauteur de l'axe 2 par rapport aux montants est réglable. L'ensemble composé des moyens coulissants et des moyens de fixation forme les moyens de réglage de la hauteur de l'axe horizontal de la porte. En pratique, dans l'exemple représenté, l'axe 2 est constitué par deux tronçons d'axe portés dans l'alignement l'un de l'autre par respectivement l'un et l'autre moyens de support 10. Les tronçons d'axe 2 sont en prise respectivement avec l'un et l'autre bras 6 de la porte 1.

En référence aux Figs. 1 et 4, les moyens de support 10 sont constitués par deux flasques comprenant un corps rectangulaire 14 et un bras 13. L'axe 2 intervient à l'extrémité arrière du bras 13, l'extrémité avant de ce dernier étant raccordée au corps 14. Dans la partie supérieure du corps 14, est ménagé un évidement formant logement ouvert vers le haut adapté à recevoir l'axe 31 porté par le bras 6 correspondant. En position de fermeture de la porte, l'axe 31 se trouve dans ce logement. Lorsque la porte s'ouvre, cet axe sort du logement, suivant le pivotement vers le haut du bras 6.

En référence aux Figs. 1, 2 et 4, les moyens coulissants 11 sont constitués par des profilés de forme correspondant à la forme des profilés formant enveloppes des montants 3, de longueur inférieure à celle de ces enveloppes, et de section de dimensions légèrement inférieures à celles de la section de ces enveloppes, de manière à ce que ces profilés 11 puissent être installés à l'intérieur des profilés 3, ainsi qu'on le voit bien sur la Fig. 2, et puissent coulisser le long de ces profilés. Les flasques de support 10 sont soudés aux extrémités supérieures des profilés 11. En position la plus basse de l'axe 2, représentée sur la Fig. 1, les flasques 10 se trouvent juste au-dessus des profilés 3, tandis qu'en position la plus haute de l'axe 2, représentée sur la Fig. 4, les flasques 10 se trouvent à bonne distance de l'extrémité supérieure des profilés 3.

En référence aux Figs. 1 et 4, les moyens de fixation comprennent des pattes horizontales 5 soudées au niveau d'une partie inférieure des profilés 3, des pattes horizontales 4 soudées au niveau d'une partie supérieure des profilés 3 et des pattes 12 soudées au niveau de l'extrémité inférieure des profilés coulissants 11. Les pattes 4, 5 et 12 sont pourvues de percements correspondants permettant une fixation par vissage. En position la plus basse de l'axe 2, représentée sur la Fig. 1, les pattes 12 sont vissées sur les pattes 5, tandis qu'en position la plus haute de l'axe 2, représentée sur la Fig. 4, les pattes 12 sont vissées sur les pattes 5.

Selon l'invention, en référence à la Fig. 1, le système de commande de la porte 1 comprend des vérins de commande 20 logés dans les montants 3 et exerçant une action verticale. Le vérin 20 est orienté de manière à ce que son fût 21 s'étende le long d'une partie inférieure du montant 3 et sa tige 22 projette vers le haut. Ainsi qu'on le voit sur les Figs. 2 et 3, le vérin 20 se trouve à l'intérieur du périmètre défini par les parois du profilé 3 et, dans la zone où s'étend le profilé coulissant 11, à l'intérieur du périmètre défini par les parois de ce profilé 11. Le vérin 20 est maintenu vertical par des moyens de guidage situés notamment au niveau des pattes de fixation 4 et 5. Le pied du fût du vérin est en prise avec l'axe 44 d'un sabot 40 qui sera décrit par la suite et la tête de la tige du vérin est en prise avec une pièce coulissante 37 par l'intermédiaire d'une pièce de fixation à deux axes 36. La pièce coulissante 37 est un flasque comprenant une tête de forme triangulaire à sommet arrondi pointant vers le haut et deux queues latérales adaptées à venir porter contre respectivement l'un et l'autre côtés de la paroi ouverte du profilé coulissant 11, à l'intérieur de ce dernier. De la sorte, la pièce coulissante 37 peut coulisser verticalement le long du profilé 11.

Selon l'invention, en référence à la Fig. 1, une biellette 30 transforme le mouvement de translation du vérin 20 en mouvement de rotation de la porte 1. La biellette 30 est articulée, d'une part, à un axe 32 se trouvant au sommet de la pièce coulissante 37 à laquelle il est lié par l'intermédiaire d'une pièce de fixation à deux axes 35 et, d'autre part, à l'axe 31 du bras 6 correspondant de la porte 1.

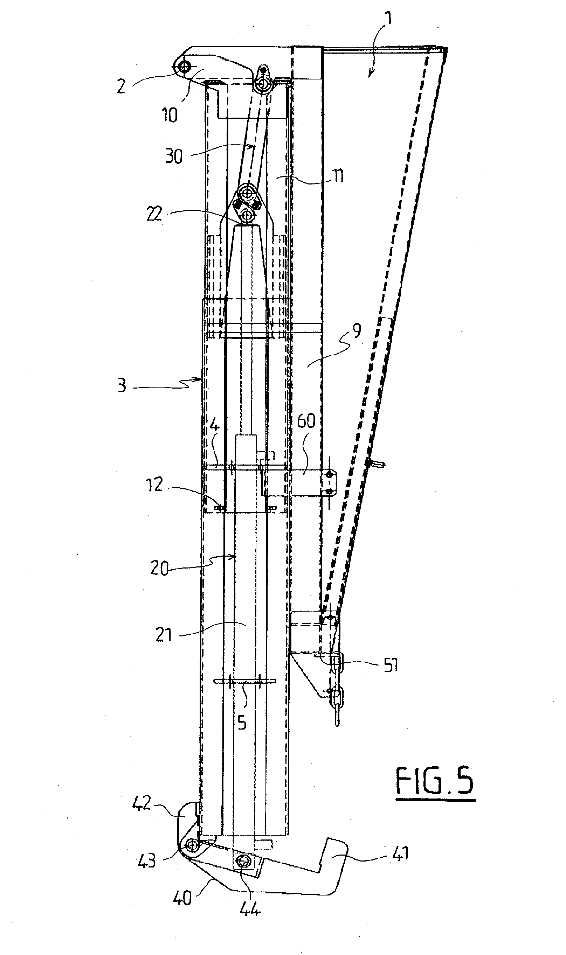

Selon l'invention, en référence à la Fig. 1, un système de verrouillage de la porte 1 comprend, pour chaque montant 3, un sabot 40 monté pivotant autour d'un axe 43 parallèle à l'axe 2 et porté à l'extrémité d'une patte soudée au dessous du montant 3, au niveau du bord arrière de ce dernier. Le sabot 40 a une forme générale de U, avec un corps s'étendant sous le montant 3 et deux bras d'extrémités 41 et 42 s'étendant vers le haut à l'avant et à l'arrière du montant 3. Les bras 41 et 42 comportent au niveau de leurs côtés intérieurs des moyens de butée adaptés à venir en contact avec, respectivement, le côté avant du nez 51 ou de la rallonge 50 de la porte 1 et le côté arrière du montant 3. L'axe 43 intervient au niveau de l'intersection entre le corps et le bras arrière 42. Un axe 44 avec lequel le pied du fût du vérin 20 est en prise est installé dans une partie médiane du corps du sabot 40. Le sabot 40 pivote entre une position de verrouillage, représentée sur la Fig. 1 ou sur la Fig. 4, dans laquelle l'extrémité 41 du sabot vient en butée contre le nez 51 ou la rallonge 50 de la porte 1, et une position de déverrouillage, visible sur la Fig. 5, dans laquelle l'extrémité 42 du sabot vient en butée contre le montant 3.

Selon l'invention, le vérin 20, commandant le pivotement de la porte 1, commande également le pivotement du sabot 40, ce dernier étant articulé au pied du vérin par l'intermédiaire de l'axe 44.

En phase d'ouverture de la porte 1, lorsque le vérin 20 est actionné, le fût du vérin 20 va se translater vers le bas et faire pivoter le sabot 40 en position de déverrouillage. En effet, l'effet du poids de la porte 1 transmis par la biellette 30 maintient immobile la tête du vérin. Une fois le bras 42 du sabot 40 en butée contre le montant 3, le fût du vérin ne peut plus descendre et l'action du vérin va alors s'exercer vers le haut, sollicitant la tête du vérin vers le haut ce qui, par l'intermédiaire de la biellette 30, fait pivoter la porte 1 vers le haut.

En phase de fermeture de la porte 1, la porte 1 va d'abord se rabattre, tandis que la tige 22 du vérin se translate vers le bas en se rétractant à l'intérieur du fût 21 qui reste immobile par rapport aux montants et, lorsque la porte 1 est fermée, la tige 22 reste immobile par rapport au montant 3 et c'est le fût 21 qui remonte entraînant le pivotement du sabot en position de verrouillage.

L'ouverture et la fermeture de la porte se font de la même façon selon que l'axe 2 est en position basse, en référence à la Fig. 1, ou en position haute, en référence à la Fig. 4, à deux différences près. La première est que la position de fermeture de la porte 1 dans le cas de la position haute de l'axe représentée sur la Fig. 4 correspond à une position du vérin 20 dans laquelle la tige 22 n'est pas complètement rétractée à l'intérieur du fût 21, la tête du vérin se trouvant à une certaine distance de l'extrémité supérieure du fût du vérin. La seconde est que, pour que le verrouillage de la porte soit possible lorsque l'axe est en position haute, la porte doit être prolongée par une rallonge 50 fixée dans un moyen de fixation prévu à cet effet dans le nez 51.

La fixation de l'axe 2 en position haute permet notamment l'installation de ridelles ou réhausses sur la benne.

Selon l'invention, en référence aux Figs. 5 et 6, un moyen de blocage amovible peut être installé entre la porte 1 et les montants 3. Il s'agit par exemple d'une plaque 60 vissée contre la paroi latérale extérieure du profilé 9 formant épaulement latéral de la porte 1 et dépassant vers l'arrière de manière à ce que, en position de fermeture de la porte, cette plaque s'étende contre la paroi extérieure du montant 3 correspondant jusqu'à atteindre l'ouverture centrale de cette paroi. Un rebord 61 de la plaque 60 s'étend à travers cette ouverture vers l'intérieur du profilé 3 et vient en butée avec l'arête de la paroi de ce profilé. La plaque 60 empêche donc la porte 1 de s'écarter des montants 3. En revanche, elle n'empêche pas le coulissement de la porte 1 le long des montants 3.

De la sorte, l'ensemble solidaire constitué par la porte 1, les flasques de support 10 et les coulisseaux 11 peut être sollicité en coulissement vers le haut sous l'action du vérin 20 effectuant, par l'intermédiaire de la biellette 30, une poussée vers le haut.

Ainsi, lorsque les pattes 12 sont désolidarisées des pattes 4 ou 5, ainsi qu'on le voit sur la Fig. 5, l'action du vérin 20 commande le déplacement vertical de l'ensemble constitué par la porte 1, les flasques 10 et les coulisseaux 11, par coulissement de ces derniers dans les montants 3, et la porte peut être commandée en ouverture par coulissement. La course de la porte est limitée par les butées constituées par les pattes 4 et 5.

## Revendications

1. Système de commande de porte rabattable, ladite porte rabattable (1) étant articulée autour d'un axe horizontal (2) installé entre deux montants (3) et pouvant, à partir d'une position de fermeture dans laquelle elle s'étend contre lesdits montants, pivoter vers le haut sous la commande dudit système de commande, **caractérisé en ce que** ledit système de commande comporte des moyens coulissants (11) adaptés à coulisser le long desdits montants et des moyens de fixation (4, 5, 12) adaptés à immobiliser lesdits moyens coulissants par rapport auxdits montants, lesdits moyens coulissants et lesdits moyens de fixation étant prévus pour permettre le réglage de la hauteur de l'axe horizontal (2) de ladite porte.

2. Système de commande selon la revendication 1, **caractérisé en ce que** ledit système de commande comprend au moins un moyen de commande (20) adapté à exercer une action dans une direction parallèle auxdits montants (3).

3. Système de commande selon la revendication 2, **caractérisé en ce que** ledit moyen de commande (20) comprend un organe (22) à déplacement commandé en translation dans une direction parallèle auxdits montants (3), ledit organe étant adapté à commander le pivotement de ladite porte (1) par l'intermédiaire d'un moyen de transmission (30).

4. Système de commande selon la revendication 3, **caractérisé en ce que** ledit moyen de commande est un vérin (20) s'étendant le long d'un montant (3).

5. Système de commande selon la revendication 4, **caractérisé en ce que** ledit vérin (20) est orienté de manière à ce que son fût (21) s'étende le long d'une partie inférieure dudit montant (3) et sa tige (22) projette vers le haut, ledit moyen de transmission (30) étant raccordé à l'extrémité supérieure de ladite tige.

6. Système de commande selon la revendication 3, **caractérisé en ce que** ledit moyen de transmission est une biellette (30) articulée, d'une part, audit organe (22) à déplacement commandé en translation et, d'autre part, à ladite porte (1), à une certaine distance dudit axe horizontal (2).

7. Système de commande selon la revendication 6, **caractérisé en ce que** ledit moyen de commande est un vérin (20), ladite biellette (30) étant articulée à une extrémité supérieure de la tige (22) dudit vérin.

8. Système de commande selon l'une quelconque des revendications précédentes, **caractérisé en ce que** ledit moyen de commande (20) est installé à l'intérieur d'un desdits montants (3).

9. Système de commande selon la revendication 8, **caractérisé en ce que** ledit moyen de commande (20) est installé à l'intérieur d'un moyen coulissant (11) adapté à coulisser à l'intérieur dudit montant (3).

10. Système de commande selon l'une quelconque des revendications précédentes, **caractérisé en ce qu'**un moyen de commande (20) est installé dans chacun desdits montants (3).

11. Système de commande selon l'une quelconque des revendications précédentes, **caractérisé en ce qu'**un système de verrouillage de la porte (1) comprend au moins un sabot (40) monté au dessous d'un montant (3) et pivotant entre une position de verrouillage dans laquelle une extrémité (41) du sabot vient en butée contre ladite porte et une position de déverrouillage.

12. Système de commande selon la revendication 11, **caractérisé en ce que** ledit sabot (40) est monté pivotant autour d'un axe (43) parallèle à l'axe (2) de la porte (1).

13. Système de commande selon la revendication 12, **caractérisé en ce que** ledit sabot (40) pivote sous la commande d'un moyen de commande (20) adapté à exercer une action dans une direction parallèle audit montant (3).

14. Système de commande selon la revendication 13, **caractérisé en ce que** ledit moyen de commande (20) comprend un organe (21) à déplacement commandé en translation dans une direction parallèle auxdits montants (3), ledit organe étant articulé par son extrémité inférieure au sabot (40), à une certaine distance de l'axe (43) dudit sabot.

15. Système de commande selon la revendication 14, **caractérisé en ce que** ledit moyen de commande est un vérin (20) s'étendant le long d'un montant (3).

16. Système de commande selon la revendication 15, **caractérisé en ce que** ledit vérin (20) est orienté de manière à ce que son fût (21) s'étende le long d'une partie inférieure dudit montant (3) et sa tige (22) projette vers le haut, ledit sabot (30) étant raccordé à l'extrémité inférieure dudit fût.

17. Système de commande selon l'une quelconque des revendications 13 à 16, **caractérisé en ce que** le même moyen de commande (20) commande le pivotement de ladite porte (1) et le pivotement dudit sabot (40).

18. Système de commande selon la revendication 17, **caractérisé en ce que** ledit moyen de commande (20) adapté à exercer une action dans une direction parallèle auxdits montants (3) agit par son extrémité supérieure (22) sur ladite porte (1) et par son extrémité inférieure (21) sur ledit sabot (40).

19. Système de commande selon la revendication 18, **caractérisé en ce que** ledit moyen de commande (20) est un vérin dont l'extrémité inférieure du fût (21) est articulée sur ledit sabot (40) et dont l'extrémité supérieure de la tige (22) est articulée sur ladite porte (1).

20. Système de commande selon la revendication 18 ou 19, **caractérisé en ce que**, en phase d'ouverture de ladite porte (1), l'extrémité inférieure dudit moyen de commande (20) fait d'abord pivoter ledit sabot en position de déverrouillage, l'extrémité supérieure (22) dudit moyen de commande étant maintenue immobile par l'action du poids de ladite porte (1), puis l'extrémité supérieure dudit moyen de commande fait pivoter ladite porte, l'extrémité inférieure (21) dudit moyen de commande étant maintenue immobile du fait d'une extrémité (42) dudit sabot qui vient en butée contre ledit montant (3).

21. Système de commande selon l'une quelconque des revendications précédentes, **caractérisé en ce qu'**un moyen de blocage amovible intervient entre ladite porte (1) et au moins un desdits montants (3), ledit moyen de blocage interdisant l'ouverture par pivotement de ladite porte mais permettant un coulissement relatif de ladite porte par rapport auxdits montants (3), de sorte que lorsque ledit moyen de commande (20) est actionné, il sollicite l'ensemble solidaire constitué par ladite porte (1), lesdits moyens de support (10) et lesdits moyens coulissants vers le haut.

22. Système de commande selon l'une quelconque des revendications précédentes, **caractérisé en ce que** ladite porte (1) comporte dans sa partie inférieure une rallonge amovible (50) permettant le réglage de la hauteur de ladite porte.

23. Système de commande selon l'une quelconque des revendications précédentes, **caractérisé en ce que** ladite porte (1) est installée à l'arrière d'un conteneur, lesdits montants (3) étant disposés de part et d'autre d'une ouverture arrière dudit conteneur.

24. Système de commande selon la revendication 23, **caractérisé en ce que** ledit conteneur est une benne.

25. Système de commande selon la revendication 24, **caractérisé en ce que** ledit conteneur est une benne basculante.
